# EUROPEAN PATENT SPECIFICATION

(11) **EP 2 524 818 B1**
(45) Date of publication and mention of the grant of the patent: **02.07.2014**
(21) Application number: 12167982.3
(22) Date of filing: 15.05.2012
(51) Int. Cl.: B60C 23/04, B29D 30/00

(54) **Embedded transponder and tire assembly and method of construction thereof**
Eingebetteter Transponder und Reifenbaugruppe, und Verfahren zur Konstruktion davon
Transponder intégré dans un pneumatique et son procédé de fabrication

(30) Priority: 19.05.2011 US 201113110957
(43) Date of publication of application: 21.11.2012
(73) Proprietor: The Goodyear Tire & Rubber Company, Akron, OH 44316-0001 (US)
(72) Inventor: Lionetti, Robert Edward, L-7227 Bereldange (LU); Croissant, Bernard, B-6600 Bastogne (BE); Maus, Peter Cornelius, B-4760 Bullingen (BE)
(74) Representative: Kutsch, Bernd

(56) References cited:
- EP-A1- 2 186 658
- FR-A1- 2 936 185
- US-A- 5 218 861

## Description

### Field of the Invention

The invention relates generally to a transponder and tire assembly and method of construction and, more specifically, to a tire in which a transponder is embedded for operational deployment as an assembly.

### Background of the Invention

A tire assembly incorporating an embedded electronic device such as a passive UHF radio frequency identification transponder enables automatic identification processes to be employed during a tire life cycle. Such identification enables efficiencies in manufacturing, logistic supply chain, and during tire service for maintenance and other service transactions. These efficiencies are realized from the capability to track a tire by using a unique asset identifier such a an EPC code assigned to a transponder assembled into the tire. Embedding a transponder into a tire as early as possible in the tire manufacturing process maximizes the potential benefits but must be done in a manner that does not compromise transponder or tire performance either during the manufacturing process or during the service life of the tire.

US-A- 5,218,861 describes a pneumatic tire and tag assembly in accordance with the preamble of claim 1.

FR-A- 2 936 185 describes a tire comprising an electronic tag wherein the electronic tag is located radially outward from the ply turn-up end.

### Summary of the Invention

The invention relates to an assembly in accordance with claim 1, a tire in accordance with claim 6, and to a method in accordance with claim 7.

Dependent claims refer to preferred embodiments of the invention.

According to the invention, a pneumatic tire and tag assembly includes a tire carcass having one or more radially inner ply components extending around an annular bead member to a ply turnup portion, the ply turnup portion extending radially outward from the bead member to a ply turnup end. The tire carcass further includes a barrier layer component positioned axially inward from and adjacent to the ply component and an electronic tag device embedded within the tire carcass between the barrier layer component and the ply component in a lower sidewall region of the tire carcass.

The radial tag distance is within a radial range of 15 percent and 35 percent of the tire section height as measured with reference to the lower sidewall toe location.

According to a further preferred aspect, the tag is transmission-operative when embedded within the tire carcass between the barrier layer component and the ply component during green tire construction.

### Definitions

"Aspect ratio" of the tire means the ratio of its section height (SH) to its section width (SW) multiplied by 100% for expression as a percentage.

"Asymmetric tread" means a tread that has a tread pattern not symmetrical about the center plane or equatorial plane EP of the tire.

"Axial" and "axially" means lines or directions that are parallel to the axis of rotation of the tire.

"Radial" and "radially" means directions radially toward or away from the axis of rotation of the tire.

"Sener" is a measurement of the dissipated energy due to a deformation of a measured element, looking at the strain energy density cycle at a defined position. The cycle is defined by maximum and minimum.

### Brief Description of the Drawings

The invention will be described by way of example and with reference to the accompanying drawings in which:
FIG. 1 is a perspective view of an electronic tire tag assembly.
FIG. 2 is a perspective view of the tag encased in a carrier strip.
FIG. 3 is a functional block diagram of the tag memory.
FIG. 4A is a perspective view of a prior art tire location for an electronic tag.
FIG. 4B is a section view of the alternative prior art tire location for an electronic tag of FIG. 4A.
FIG. 5A is a perspective view of an alternative prior art tire location for an electronic tag.
FIG. 5B is an enlarged section view of the alternative tire location of FIG. 5A.
FIG. 6 is a section view showing alternative electronic tag locations comprising the invention.
FIG. 7A is a graph of SENER Gradient vs. distance from Ply End at a Tag Position Between Squeegee Ply.
FIG. 7B is a graph of SENER Gradient vs. Strain Energy Density Cycle at Sections of the Tire.
FIG. 8 is a section view through a tire bead region of an alternatively configured tire showing RFID Tag locations DR1 and DR2 relative to ply-end.
FIG. 9A is a graph of SENER Gradient vs. distance from Ply End at a Tag Position on APEX2 without reinforced elements.
FIG. 9B is a graph of SENER Gradient vs. Strain Energy Density at Sections of the Tire for the Tag Position of FIG. 9A.
FIG. 10 is a graph of read range of a tag in a new tire and after durability testing at specified reference distances from ply end.

### Detailed Description of the Invention

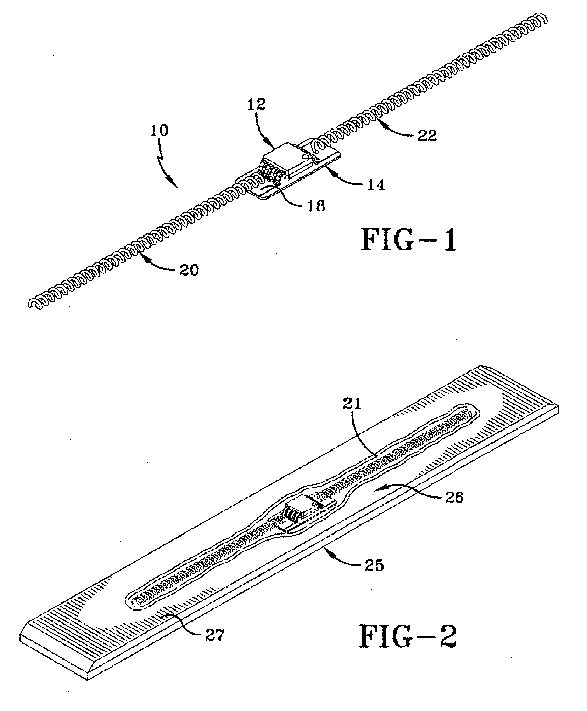

Referring first to FIGS. 1, 2, an electronic tire tag or transponder 10 is of a conventional commercially configured type and includes an antenna formed by a pair of coiled antenna segments 20, 22. An integrated circuit package (IC) 12 is mounted to a carrier substrate 14 and includes interconnection leads 16 extending from opposite IC package sides respectively to engage a contact pad 18. The antennae 20, 22 are electrically connected to the IC leads 16 and suitably tuned to a predetermined radio frequency "f" for receiving and transmitting RF signals, with an external transceiver (not shown). A coating 24 of suitable material such as epoxy encases and protects the transponder 10 and the coated transponder 10 mounts to an upper surface 27 of a pair of layered green gum strips 25, 26. The package shown is then incorporated into a green tire carcass during tire build and is maintained within the green tire throughout a curing cycle.

Operatively, an interrogation signal may be received by the antennae 20, 22 from a remote transceiver (not shown) and transmitted to the integrated circuitry within the package 12. The integrated circuit within the package 12 processes the RF interrogation signal into a power signal for powering a logic circuit that includes conventional ROM, RAM, or other known types of memory storage devices and circuitry. Data transmission from the storage devices is thereby enabled and stored data is transmitted by the antenna 20, 22 back to an external devices reader or transceiver (not shown).

The tag 10 may be incorporated within various products and utilized to communicate stored data relating to such products to the remote reading device. The tag 10 thus may serve as a passive UH F radio frequency identification transponder that enables automatic identification processes during a tire life cycle. Such identification enables better process efficiencies in manufacturing, logistic supply chain, and during tire service for maintenance and other service transactions. These efficiencies are realized from the unique asset accurate tracking capability provided through the use of the unique asset identifier. The identifier may be a 96-bit EPC code applied to the transponder 10. Embedding the transponder 10 within a green tire as early as possible in the tire manufacturing process maximizes the potential benefits possible from use of the unique code identifier.

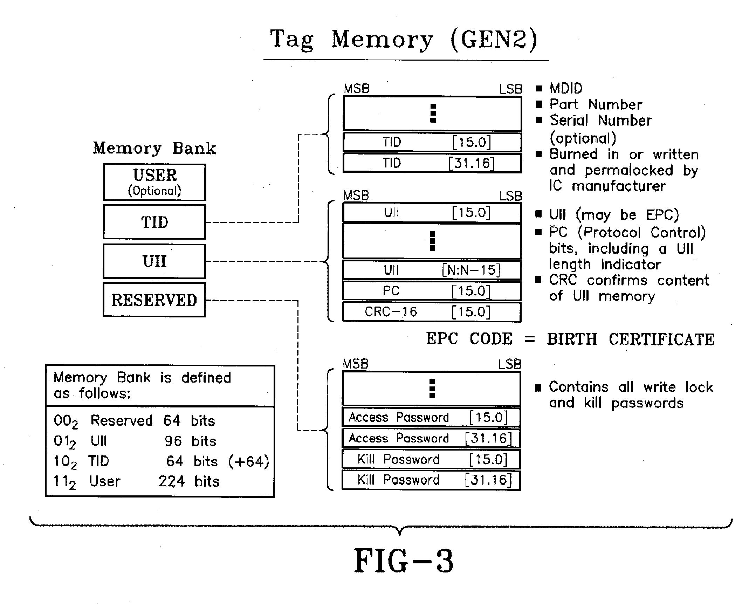

FIG. 3 illustrates, in schematic form, electronic IC tag memory of a type commercially available. The tag memory provides tag identification such a part number, serial number, etc. that may be burned in or written in permalocked status by an IC manufacturer. The identification number(s) are thus accessible throughout the tire build and tire use cycles. In addition, user identification may also be encoded into the tag such as an EPC number with associate protocol control and memory content confirmation CRC. The EPC code is associated with the tag embedded within a tire and thus represents a birth certificate for the tag and tire assembly. In addition, write lock, access, and kill passwords may be incorporated into tag member for operational access security purposes.

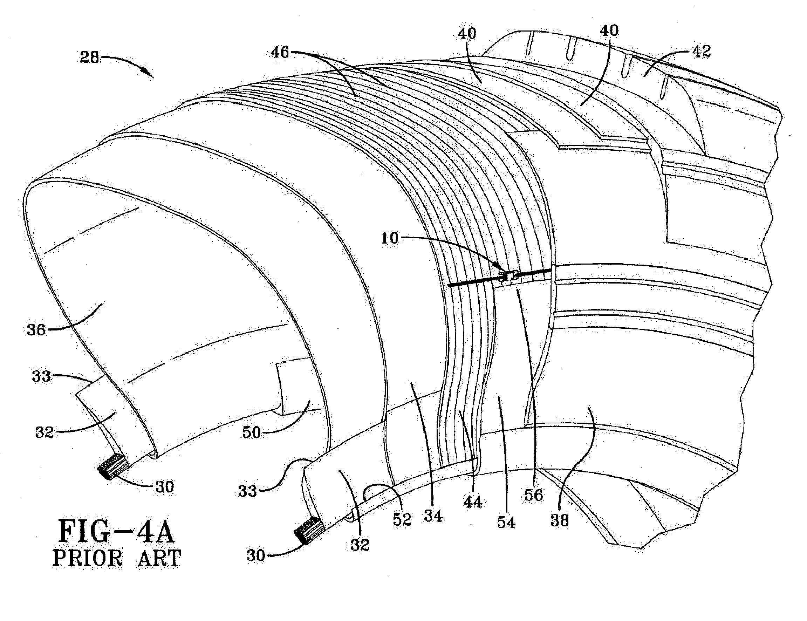

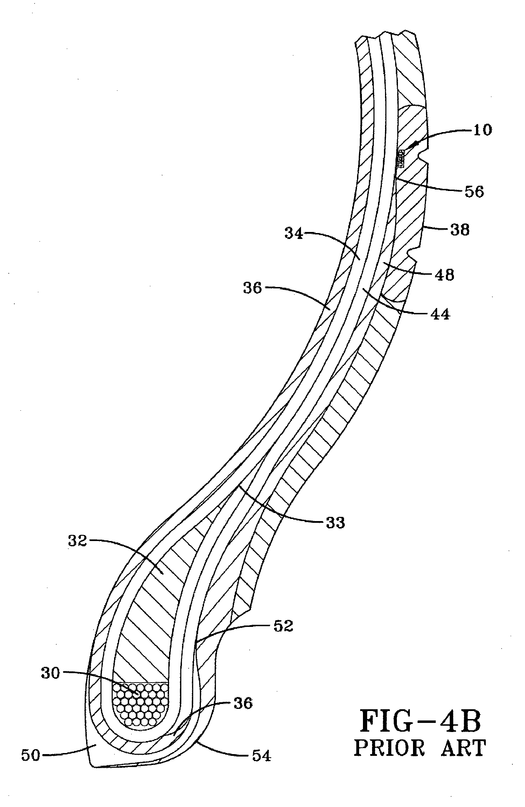

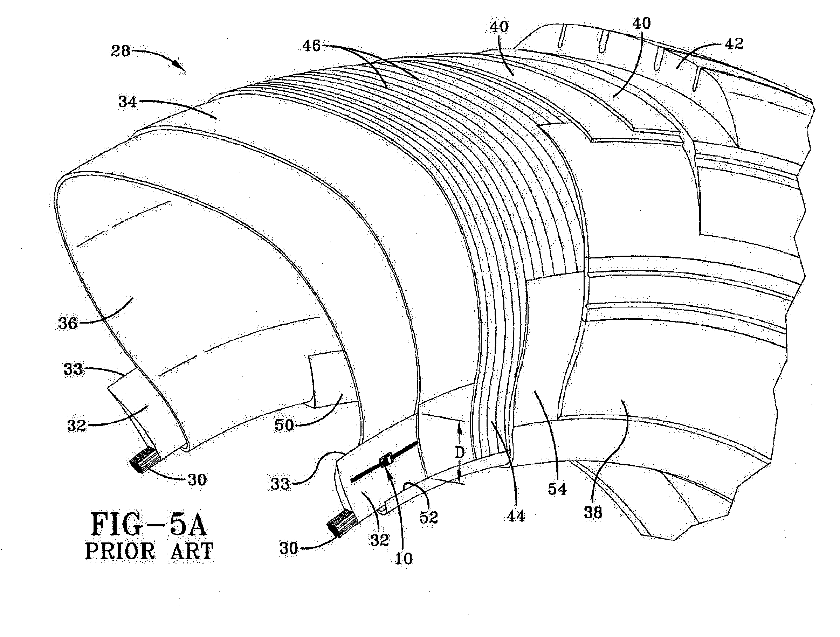

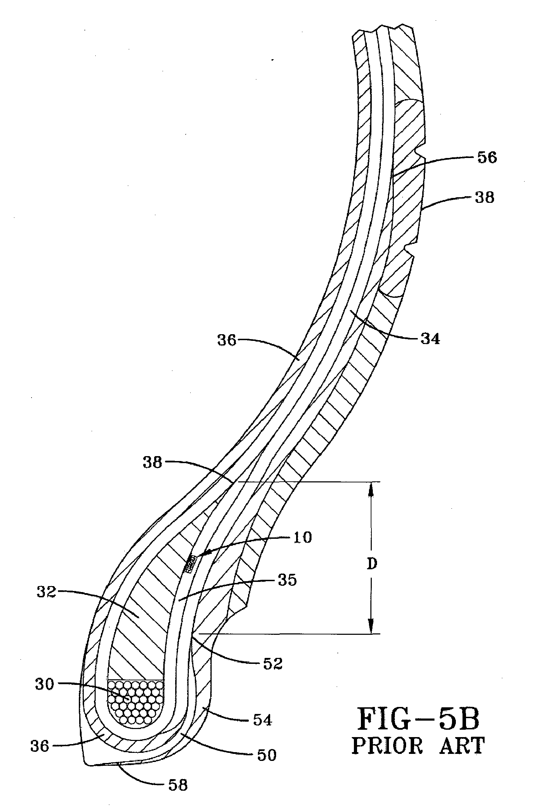

Referring to FIGS. 4A, 4B, 5A, 5B, conventional tire and transponder assemblies are shown in which the tag 10 is affixed to a tire 28 by suitable means such as an adhesive. The tire 28 includes beads 30 and a pair of apexes 32, each proximally situated radially outward of a respective bead 30. The apexes 32 constitute a rubber filler that is placed above the beads in an area within the tire where air could otherwise be trapped in its absence. Each of the apexes 32 terminates at a radially outward apex end 33. One or more tire plies 34 44; an innerliner 36; and sidewalls 38 are further added in the tire build. A belt package 40 is located beneath the tread 42 at the crown of the tire. The plies 34, 44 constitute layers of rubber-coated cord fabric extending from bead to bead and are turned up around the beads 30, thereby locking the bead into the assembly or carcass. Parallel cords 46 reinforce the tire plies, formed by twisted fiber or filament of polyester rayon, nylon, steel, or other material which gives the tire carcass and belts strength. In general, the parallel cords 46 extend from the bead to bead 30 and reinforce the tire.

A green tire 28 is constructed component by component. The beads 30 maintain the integrity of the green tire throughout the build process as layer ends are wrapped and turned up around the beads. The ply turnup 48 from the ply 44 wraps under the beads 30 as shown. Each apex 32 is positioned above and radially outward from a respective bead 30 and extends to apex end 33. A toe guard component 50 is positioned during the tire build to the outside of the beads 30. A chafer component 54 is formed of reinforcing material around the bead and positioned axially outward so as to engage a rim flange area to thereby protect chafing of the tire by the rim parts. The chafer extends to a chafer end 56.

The tag assembly 10, subsequent to the coating operation shown in FIGS. 4A, 4B and 5A, 5B is preferably introduced into the tire during the green tire build operation. As shown in FIGS. 4A and 4B the tag assembly 10 may be located at a sidewall location above the apex 32, chafer 54, and ply turn-ups between the ply 44 and the sidewall 38. The tag assembly is affixed to the ply layer 44 by suitable known techniques such as the use of adhesive. The tag is oriented relative to the tire ply 44 such that the tag antennae 20, 22 extend perpendicular to the circumferentially extending ply layers. In particular, for steel reinforced ply tires, the tag antennae 20, 22 extend perpendicular to the ply cords 46 within the ply 44. Embedding the tag assembly 10 in such an orientation utilizes the cords 46 of the ply behind the tag assembly 10 to provide structural support and reinforcement to the tag assembly. While the antennae 20, 22 in the tag assembly 10 are flexible, it is nonetheless desirable to limit the degree of flexure in the antennae to maintain the integrity of the antennae segments and their connection to the contacts 16 of the tag device 10. Orienting the antenna segments perpendicular to the ply cords thus minimizes flexure in the antennae 20, 22 during the life of the tire.

While the location of the tag assembly as shown in FIGS. 4A and 4B is advantageous in achieving a good reading from the tag by a remote reader, the sidewall of the tire is a high flexure region in a tire. The flexing that occurs in such a location may cause damage to the tag assembly 10 and the presence of the tag assembly 10 in such a location may tend to cause sidewall fatigue, damage, and/or separation. The tag assembly 10 may as a result have its integrity threatened by the harsh mechanical environment in the sidewall region.

Another location of the tag assembly 10 within the tire 28 may alternatively selected to be at the position of FIGS. 5A and 5B. In this location, the tag assembly is positioned against an outer surface of the tire apex 32 between the apex 32 and the turn-up 35 of ply 34. As with the tag position of FIGS. 4A and 4B, the orientation of the tag 10 in FIGS. 5A and 5B places the antennae perpendicular to the direction of ply cords 46. The tag 10 is placed against the outer surface of the apex 32 between ends of apex 32. The tag assembly 10 may be attached by suitable means such as adhesive directly to the outside of the apex. In the position shown in FIGS. 5A and 5B, the tag 10 is located above (radially outward from) the ply-end 52.

While affixation of the tag to the radially outward side of a tire apex or ply as shown in FIGS. 4A, 4B, 5A, 5B are functional, the tag is not insulated from the effect of geometric circumference changes in the building drum during tire build formation. Such geometric changes may cause the tag to move from its intended location to the detriment of tag performance. In addition, even at the intended location, the tag may not provide optimum tag durability, read range, and performance when the tire (with tag) is subsequently mounted to a tire rim and deployed on a vehicle.

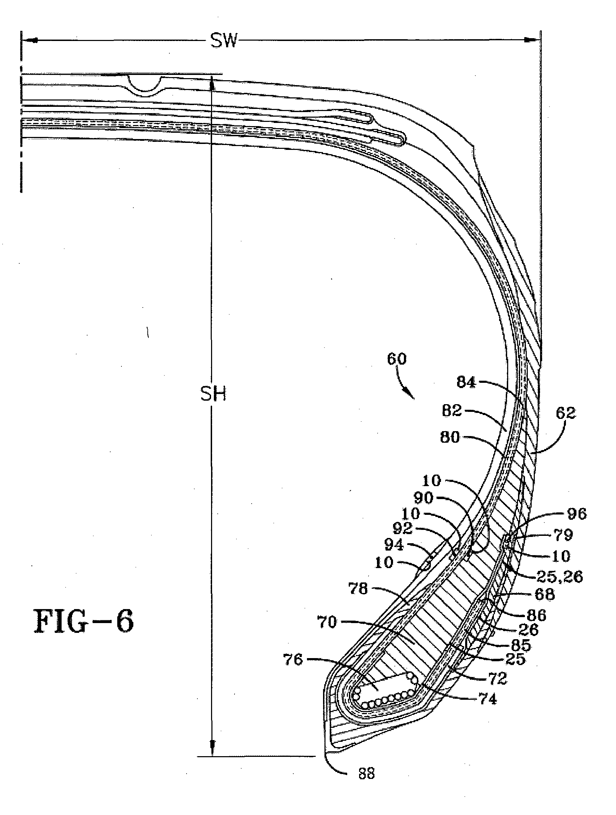

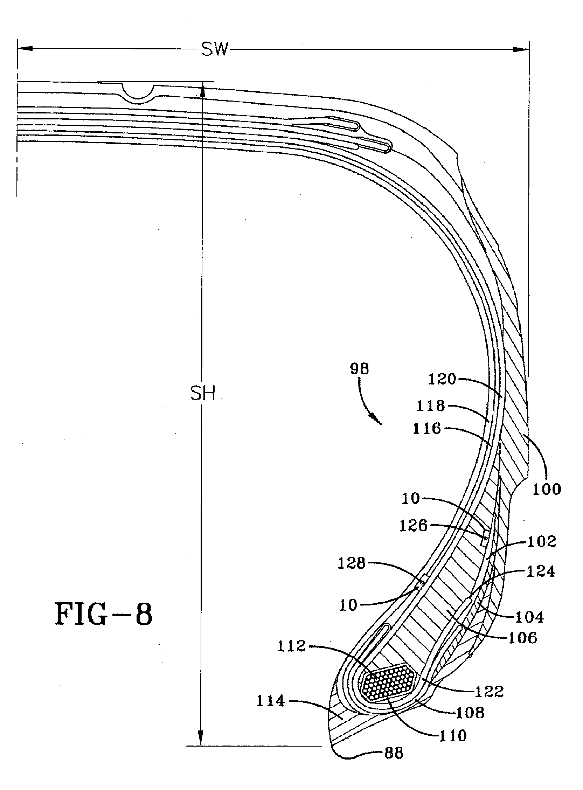

FIG. 6 illustrates a representative truck tire for on-road use. The tire 60 includes a sidewall 62, a primary apex 68 and a secondary apex 70 positioned axially outward from apex 68. A chipper component 72 and flipper component 74 surround a bead bundle 76 and a chafer component 78 underlies the bead region and extends radially outward to a position beneath the sidewall 62 at an outer end 79. A liner layer 82 bounds the tire cavity. A barrier layer, also referred herein as a "squeegee" layer 80, is disposed axially outward and adjacent to the liner 82. The squeegee layer 80 extends over a toe 88 at the base of the tire sidewall. A reinforcement ply 84 is axially outward from the squeegee layer 80 and includes a turn-up portion 85 wrapped about the bead bundle 76 and extending to a ply turn-up end 86. A pair of apex components 68, 70 are positioned within the bead area, apex 68 located radially outward from and adjacent the apex 70. For the purpose of dimensional explanation, the toe extremity 88 at the bead region is identified in FIGS. 6 and 8 and referenced below.

The gum strips 25, 26 carry the tag 10 and may, in one possible configuration 96, be located between the apexes 68, 70 such that turn-up 85 from the ply layer 84 extends between the gum strips 25, 26 as shown. In another alternate positioning of the tag 10, as shown at 90 and referred to herein as "ply/apex 1 ", the tag 10 is positioned between the ply 84 and a radially inward surface of the apex 70. The tag 10 is affixed to the ply 84 during tire build by suitable means such as adhesive. In another alternate positioning of the tag 10, at 92, the tag 10 is positioned between a radially inward side of the ply 84 and the barrier layer 80. Position 92 is referred herein as the "ply/barrier" location. In yet another alternate positioning of the tag 10, the tag 10 is affixed to an inward facing surface of the inner liner 82 as shown at 94. Such a position may be utilized to effect a repair of the tag 10 during the useful life of the tire if necessary.

FIG. 8 depicts a commercial tire 98 of a type used on buses. The tire 98 includes a sidewall 100, one or more electronic tags 10 carried by gum strips 102, a primary apex 106 and a secondary apex 104 positioned axially outward from apex 106. A chipper component 108 and flipper component 110 surround a bead bundle 112. A chafer component 114 underlies the bead region and extends radially outward to a position beneath the sidewall 100. A liner layer 118 bounds the tire cavity. A barrier layer 116 "squeegee" is disposed axially outward and adjacent to the liner 118. A reinforcement ply 120 is axially outward from the squeegee layer 116 and includes a turn-up portion 122 wrapped about the bead bundle 112 and extending to a ply turn-up end 124. A pair of apex components 68, 70 are positioned within the bead area, apex 68 located radially outward from and adjacent the apex 70. For the purpose of dimensional explanation, the toe extremity 88 is identified and referenced at the bead region in both FIGS. 6 and 8 and used below for comparative tag position placement analysis.

The gum strips 102 carry the tag 10 which may be placed in alternative tag locations 126, 128. In the location 126, the RFID tag 10 is located against the apex 106 between the apex 106 and apex 104. In the alternate position shown at 128, the tag 10 is placed in the "squeegee-ply" location wherein the tag is mounted to the ply 120 between the ply 120 and the squeegee barrier 116. The tag position 128 of FIG. 8 thus corresponds to the tag position 92 of FIG. 6.

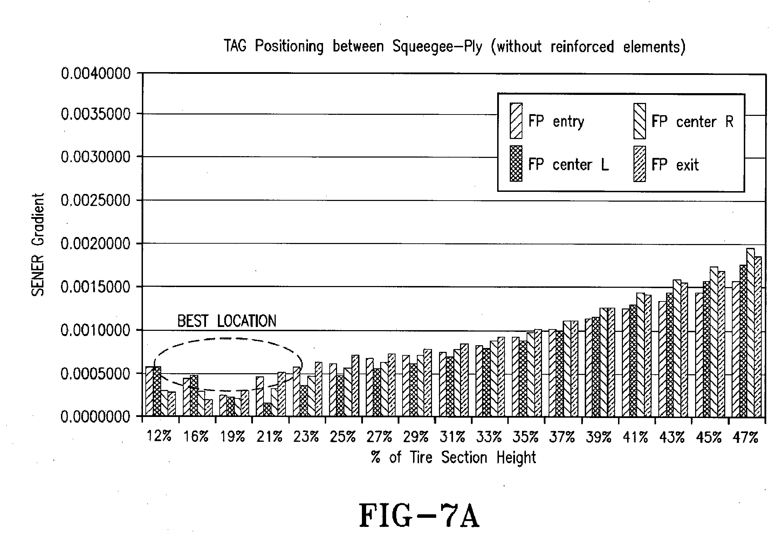

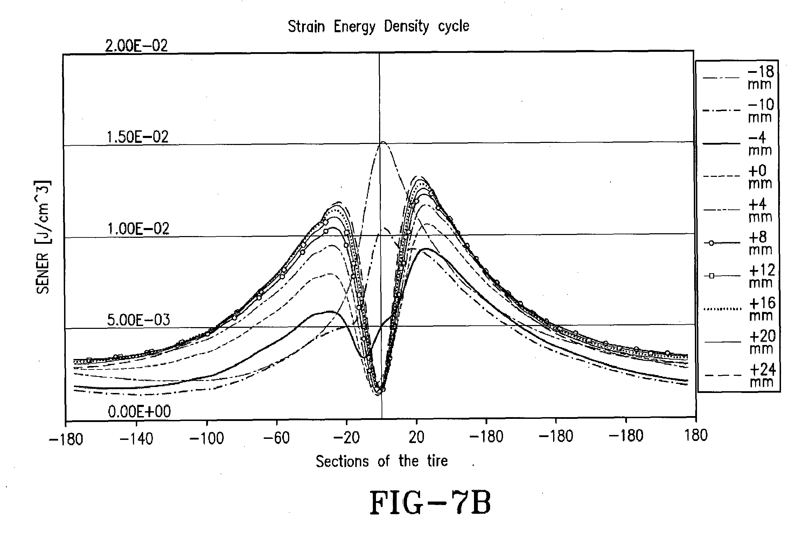

With reference to FIG. 6, alternative tag positions 90, 92, 94, and 96, and in FIG. 8 positions 126, 128, the tag 10 will encounter different strain levels within a tire that can affect read performance of the tag 10. For the purposes of explanation, the location of positions 90, 92, 94, and 96 (FIG. 6) and the tag positions 126, 128 (FIG. 8) are differentiated by reference in a radial distance from the toe extremity 88 of the tire sidewall. The graphs of FIGS. 7A and 7B demonstrate the different strain levels effect in a tag at different radial distances from the end of ply 86 for position 92 (ply/barrier) of FIG. 6 and from the end of ply 124 of FIG. 8. In FIG. 7A, the SENER gradient versus tag distance from the ply end 86 (FIG. 6) is graphed. The graph of FIG. 7A shows by bar indicia the SENER gradient at footprint entry, center left, center right, and exit locations by the box within FIG. 7A. The performance of the tag as the region of the tire to which it mounts enters and leaves the tire footprint is thus provided. The SENER gradient is a measurement of the dissipated energy from the tag due to a deformation of a measured element such as the tire mounting location of the tag. FIG. 7A depicts data for the defined position between ply and squeegee barrier layers. The cycle is defined by maximum and minimum. The smaller the SENER gradient at a given tag location, the smaller the dissipated energy and the better read performance provided by the tag. FIG. 7B shows a strain energy density cycle through sections of a tire along the horizontal axis from center against SENER levels in J/cm³. The coded placement positions of the tag are indicated vertically in the right-hand box of FIG. 7B and correspond to the placement positions of the tag indicated along the horizontal axis of FIG. 7A.

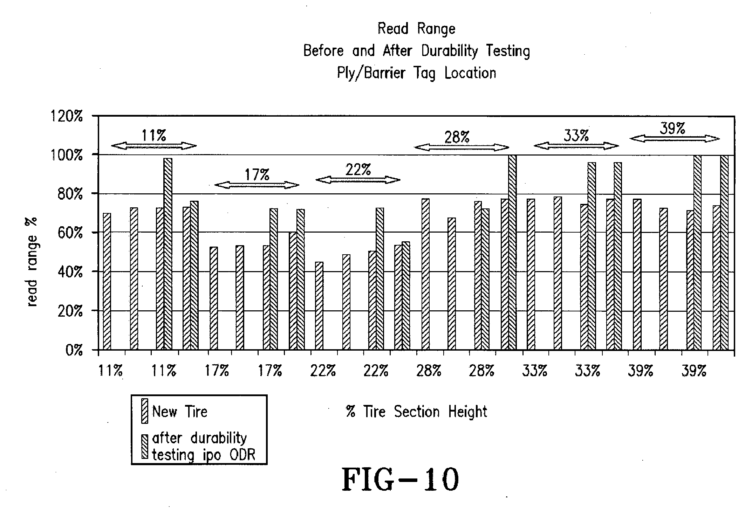

From an analysis of the results indicated by FIGS. 7A and 7B, it is seen that the best location for read performance of the tag between the squeegee and ply layers is between 15 percent and 25 percent of the tire section height as indicated in FIG. 6. The preferred range is thus defined as the radial distance of the tag measured from the toe, 15 percent to 35 percent of the tire section height when considering a range of commercial tire designs. DR1 and DR2 of FIG. 8 illustrate the method of referencing the alternative tag locations to the lower sidewall toe end 88. The preferred tag position is independent of ply ending location and a tag so located provides optimized read performance by means of a minimal energy dissipation. FIG. 10 illustrates read range modeling results with read range in percent against reference distance of the tag 10 from a ply turnup end in millimeters. Results for both new tire and durability tested tire conditions are shown. The FIG. 10 bar graph confirms that the read range in the preferred range of 14 to 22 mm for positions 92 in FIG. 6 and 126 in FIG. 8 is optimal.

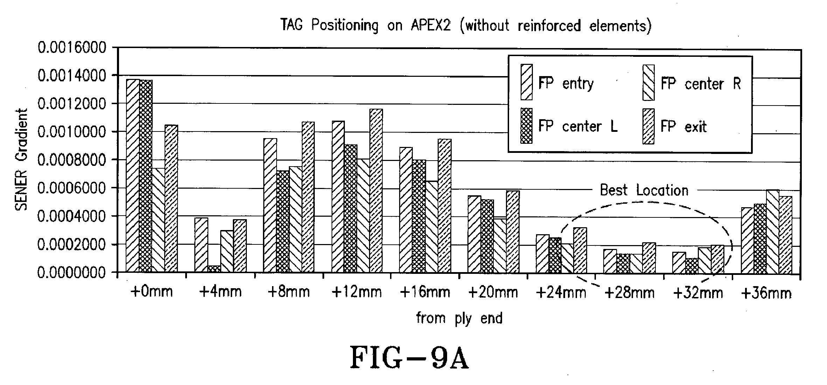

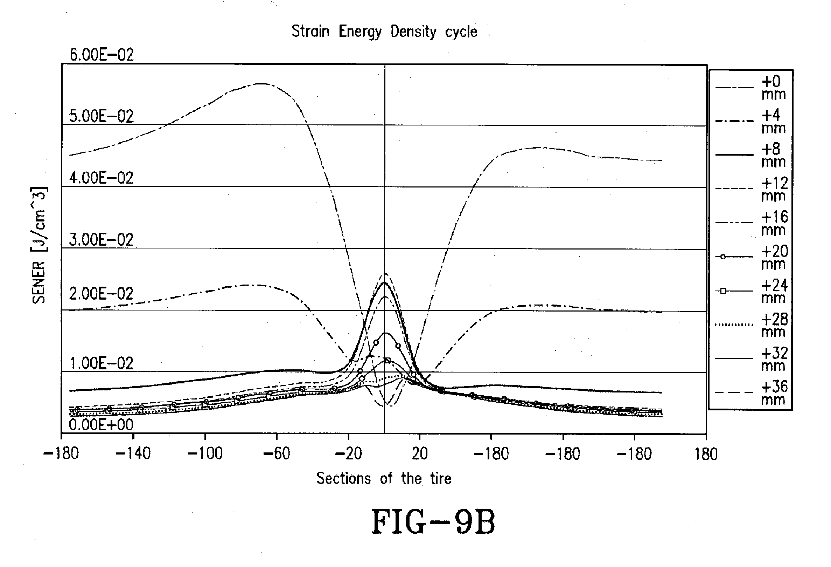

A similar analysis summarized above for position 92 is represented by the bar charts of FIGS. 9A and 9B for the apex location position 96 of FIG. 6 for the tag 10. In position 96, the tag 10 is located between apexes 68, 70, on the second apex 68. The bar charts of FIG. 9A empirically demonstrate that the best location for an apex mounted tag position 96 is between 18 mm and 26 mm from the ply end 86. The SENER measurements of FIGS. 9A, 9B demonstrate that in such a position, the tag will experience optimized read performance and minimal energy dissipation.

By comparing the results attained by testing position 92 against position 96 (FIG. 6) or 126 (FIG. 8) for the tag 10, it is clear from the SENER levels at positions 92, 126 show a clear advantage for the position of tag 10 by a factor of 3 compared to outside the apex position 96. The optimal ply/barrier position 92, 126 is independent from the ply-ending height and thus represents an optimum position across all sizes of tires including flat base tires. A location of the tag in the ply/barrier location 92, 126 also facilitates a more precise and secure placement of the tag than the outside the apex location 96 since the location 96 is more susceptible to movement due to tire construction procedures.

In summary, for a commercial tire incorporating a ply component oriented radially outward from a barrier component and one or more apex components, with the ply component extending about the bead location to a ply end, a preferred and beneficial result in read performance is achieved by mounting a tag 10 at a location between the ply component and barrier component within a range of 14 mm and 22 mm above (radially outward from) the ply ending. Such a location is benefits the read range capability of the tag by reducing energy dissipation and also places the tag in a more secure location during tire construction.

## Claims

1. A pneumatic tire and tag assembly, the assembly comprising:
a tire carcass formed by a green tire construction, the tire carcass comprising at least one radially inner ply component (84) extending around an annular bead member (76) to a ply turn-up portion, the ply turn-up portion extending radially outward from the bead member (76) to a ply turn-up end (86), the tire carcass further comprising a barrier layer component (80) positioned axially inward from and adjacent to the ply component (84), the barrier layer component (80) not extending around the bead member (76);
**characterized in that**
an electronic tag device (10) embedded within the tire carcass between the barrier layer component (80) and the ply component (84) in a lower sidewall region between 15 percent and 35 percent of the tire section height (SH) of the tire carcass, and **in that** the electronic tag device (10) is located 14 mm to 22 mm radially outward from the ply turn-up end (86).

2. The tire and tag assembly of claim 1 wherein the inner ply component (84) is wound around the annular bead member (76) from axially inside of the annular bead member (76) toward axially outside thereof.

3. The tire and tag assembly of claim 1, wherein the radial tag distance is within a radial range greater than 20 percent and less than 35 percent of the tire section height as measured with reference to the lower sidewall toe location (88)

4. The tire and tag assembly of claim 3, wherein the radial tag distance is within a radial range greater than 25 percent and less than 30 percent of the tire section height as measured with reference to the lower sidewall toe location (88)

5. The tire and tag assembly of at least one of the previous claims, wherein the tag (10) is transmission-operative when operatively embedded within the tire carcass between the barrier layer component (80) and the ply component (84) during green tire construction.

6. A cured pneumatic tire comprising the tire and tag assembly of at least one of the previous claims.

7. A method of constructing a pneumatic tire and tag assembly comprising:
forming a barrier layer component (80) over a tire building drum within a tire sidewall region of a tire carcass;
forming at least one radially inner tire ply component (84) over the barrier layer (80) on the tire building drum, the ply component (84) extending around an annular bead member (76) to a ply turn-up portion, the ply turn-up portion extending radially outward from the bead member to a ply turn-up end (86);
embedding an electronic tag device (10) within the tire carcass between the barrier layer component (80) and the ply component (84) in a lower sidewall region between 15 percent and 35 percent of the tire section height (SH) of the tire carcass and in that the electronic tag device (10) is located 14 mm to 22 mm radially outward from the ply turn-up end (86).

8. The method of constructing a pneumatic tire and tag assembly of claim 7, further comprising embedding the electronic tag (10) in a transmission-operative condition between the barrier layer component (80) and the ply component (84) during a green tire construction of the tire carcass.

## Patentansprüche

1. Luftreifen- und Tag-Anordnung, wobei die Anordnung umfasst:
eine durch einen Reifenrohlingaufbau gebildete Reifenkarkasse, wobei die Reifenkarkasse mindestens ein radial inneres Lagenbauteil (84) umfasst, das sich um ein ringförmiges Wulstelement (76) zu einem Lagenumschlagteil erstreckt, wobei das Lagenumschlagteil sich radial auswärts von dem Wulstelement (76) zu einem Lagenumschlagende (86) erstreckt, wobei die Reifenkarkasse weiter ein Barriereschichtbauteil (80) umfasst, das axial einwärts von und benachbart zu dem Lagenbauteil (84) positioniert ist, wobei das Barriereschichtbauteil (80) sich nicht um das Wulstelement (76) herum erstreckt;
**dadurch gekennzeichnet, dass**
eine elektronische Tag-Vorrichtung (10) in der Reifenkarkasse zwischen dem Barriereschichtbauteil (80) und dem Lagenbauteil (84) in einem unteren Seitenwandbereich zwischen 15 Prozent und 35 Prozent der Reifenquerschnittshöhe (SH) der Reifenkarkasse eingebettet ist,
und dadurch, dass die elektronische Tag-Vorrichtung (10) sich 14 mm bis 22 mm radial auswärts von dem Lagenumschlagende (86) befindet.

2. Reifen- und Tag-Anordnung nach Anspruch 1, wobei das innere Lagenbauteil (84) von axial einwärts von dem ringförmigen Wulstelement (76) zu axial auswärts davon herumgeschlagen ist.

3. Reifen- und Tag-Anordnung nach Anspruch 1, wobei der radiale Tag-Abstand innerhalb eines radialen Bereichs liegt, der größer als 20 Prozent und kleiner als 35 Prozent der Reifenquerschnittshöhe ist, gemessen in Bezug auf den Zehenstandort (88) an der unteren Seitenwand.

4. Reifen- und Tag-Anordnung nach Anspruch 3, wobei der radiale Tag-Abstand innerhalb eines radialen Bereichs liegt, der größer als 25 Prozent und kleiner als 30 Prozent der Reifenquerschnittshöhe ist, gemessen in Bezug auf den Zehenstandort (88) an der unteren Seitenwand.

5. Reifen- und Tag-Anordnung nach mindestens einem der vorgenannten Ansprüche, wobei das Tag (10) sendebereit ist, wenn es während des Reifenrohlingaufbaus wirksam zwischen dem Barriereschichtbauteil (80) und dem Lagenbauteil (84) in die Reifenkarkasse eingebettet ist.

6. Vulkanisierter Luftreifen, umfassend die Reifen- und Tag-Anordnung nach mindestens einem der vorgenannten Ansprüche.

7. Verfahren zum Aufbau einer Luftreifen- und Tag-Anordnung, umfassend:
Formen eines Barriereschichtbauteils (80) über einer Reifenbautrommel in einem Reifenseitenwandbereich einer Reifenkarkasse;
Formen mindestens eines radial inneren Reifenlagenbauteils (84) über der Barriereschicht (80) auf der Reifenbautrommel, wobei das Lagenbauteil (84) sich um ein ringförmiges Wulstelement (76) zu einem Lagenumschlagteil erstreckt, wobei das Lagenumschlagteil sich radial auswärts von dem Wulstelement zu einem Lagenumschlagende (86) erstreckt;
Einbetten einer elektronischen Tag-Vorrichtung (10) in die Reifenkarkasse zwischen dem Barriereschichtbauteil (80) und dem Lagenbauteil (84) in einen unteren Seitenwandbereich zwischen 15 Prozent und 35 Prozent der Reifenquerschnittshöhe (SH) der Reifenkarkasse, und dass die elektronische Tag-Vorrichtung (10) sich 14 mm bis 22 mm radial auswärts von dem Lagenumschlagende (86) befindet.

8. Verfahren zum Aufbau einer Luftreifen- und Tag-Anordnung nach Anspruch 7, weiter das Einbetten des elektronischen Tags (10) in einem sendebereiten Zustand zwischen dem Barriereschichtbauteil (80) und dem Lagenbauteil (84) während eines Reifenrohlingaufbaus der Reifenkarkasse umfassend.

## Revendications

1. Assemblage d'étiquette et de bandage pneumatique, l'assemblage comprenant :
une carcasse de bandage pneumatique que l'on obtient via une construction de bandage pneumatique à l'état cru, la carcasse du bandage pneumatique comprenant au moins un composant faisant office de nappe interne en direction radiale (84) s'étendant autour d'un membre de talon annulaire (76) jusqu'à une portion de retournement de nappe, la portion de retournement de nappe s'étendant à l'extérieur, en direction radiale, du membre de talon (76) jusqu'à une extrémité de retournement de nappe (86), la carcasse du bandage pneumatique comprenant en outre un composant faisant office de couche d'arrêt (80) disposé en direction axiale à l'intérieur du composant de nappe (84) et en position adjacente à ce dernier, le composant (80) faisant office de couche d'arrêt ne s'étendant pas autour du membre de talon (76), **caractérisé en ce que**
un dispositif d'étiquette électronique (10) est incorporé au sein de la carcasse du bandage pneumatique entre le composant (80) faisant office de couche d'arrêt et le composant faisant office de nappe (84) dans une zone de talon inférieur représentant entre 15 % et 35 % de la hauteur de section (SH) de la carcasse du bandage pneumatique, et **en ce que** le dispositif d'étiquette électronique (10) est situé à une distance de 14 mm à 22 mm en direction radiale à l'extérieur de l'extrémité de retournement de nappe (86).

2. Assemblage d'étiquette et de bandage pneumatique selon la revendication 1, dans lequel le composant (84) faisant office de nappe interne est enroulé autour du membre de talon annulaire (76) depuis l'intérieur, en direction axiale, du membre de talon annulaire (76) en direction de son côté externe en direction axiale.

3. Assemblage d'étiquette et de bandage pneumatique selon la revendication 1, dans lequel la distance radiale de l'étiquette se situe dans une plage radiale qui est supérieure à 20 % et qui est inférieure à 35 % de la hauteur de section du bandage pneumatique, telle qu'on la mesure en se référant à l'endroit (88) correspondant à l'extrémité du flanc inférieur.

4. Assemblage d'étiquette et de bandage pneumatique selon la revendication 3, dans lequel la distance radiale de l'étiquette se situe dans une plage radiale qui est supérieure à 25 % et qui est inférieure à 30 % de la hauteur de section du bandage pneumatique, telle qu'on la mesure en se référant à l'endroit (88) correspondant à l'extrémité du flanc inférieur.

5. Assemblage d'étiquette et de bandage pneumatique selon au moins une des revendications précédentes, dans lequel l'étiquette est opérationnelle par transmission lorsqu'elle est incorporée de manière opérationnelle au sein de la carcasse du bandage pneumatique entre le composant (80) faisant office de couche d'arrêt et le composant (84) faisant office de nappe au cours de la confection du bandage pneumatique à l'état cru.

6. Bandage pneumatique vulcanisé comprenant l'assemblage d'étiquette et de bandage pneumatique selon au moins une des revendications précédentes.

7. Procédé de confection d'un assemblage d'étiquette et de bandage pneumatique, comprenant le fait de :
former un composant (80) faisant office de couche d'arrêt par-dessus un tambour de confection de bandage pneumatique au sein d'une région de flanc de bandage pneumatique d'une carcasse de bandage pneumatique ;
former au moins un composant faisant office de nappe interne de bandage pneumatique en direction radiale (84) par-dessus la couche d'heure 80 sur le tambour de confection de bandage pneumatique, le composant (84) faisant office de nappe s'étendant autour d'un membre de talon annulaire (76) jusqu'à une portion de retournement de nappe, la portion de retournement de nappe s'étendant à l'extérieur, en direction radiale, du membre de talon (76) jusqu'à une extrémité de retournement de nappe (86) ;
incorporer un dispositif d'étiquette électronique (10) au sein de la carcasse du bandage pneumatique entre le composant (80) faisant office de couche d'arrêt et le composant faisant office de nappe (84) dans une zone de talon inférieur représentant entre 15 % et 35 % de la hauteur de section (SH) de la carcasse du bandage pneumatique, le dispositif d'étiquette électronique (10) étant situé à une distance de 14 mm à 22 mm en direction radiale à l'extérieur de l'extrémité de retournement de nappe (86).

8. Procédé de confection d'un assemblage d'étiquette et de bandage pneumatique, selon la revendication 7, comprenant en outre le fait d'incorporer l'étiquette électronique (10) dans un état opérationnel par transmission entre le composant (80) faisant office de couche d'arrêt et le composant (84) faisant office de nappe au cours de la confection de la carcasse du bandage pneumatique à l'état cru.
